# EUROPÄISCHE PATENTSCHRIFT

(11) **EP 2 040 592 B1**
(45) Veröffentlichungstag und Bekanntmachung des Hinweises auf die Patenterteilung: **11.08.2010**
(21) Anmeldenummer: 07720173.9
(22) Anmeldetag: 01.06.2007
(51) Int. Cl.: A47J 42/04

(54) **KOMBINIERTE SALZ- UND PFEFFERMÜHLE**
COMBINED SALT AND PEPPER MILL
MOULIN COMBINE A SEL ET A POIVRE

(30) Priorität: 13.07.2006 CH 11282006
(43) Veröffentlichungstag der Anmeldung: 01.04.2009
(73) Patentinhaber: PI-DESIGN AG, 6234 Triengen (CH)
(72) Erfinder: BODUM, Jorgen, 6045 Meggen (CH)
(74) Vertreter: Detken, Andreas
(86) Internationale Anmeldenummer: PCT/CH2007/000276
(87) Internationale Veröffentlichungsnummer: WO 2008/006230

(56) Entgegenhaltungen:
- GB-A- 2 183 173

## Beschreibung

### Technisches Gebiet

Die vorliegende Erfindung betrifft eine Gewürzmühle zum Zerkleinern zweier unterschiedlicher Würzmittel, insbesondere von Salz und Pfeffer.

### Stand der Technik

Aus der US 4,709,865 ist eine Gewürzmühle bekannt, welche zwei separate Gewürzbehälter aufweist, die unterschiedliche Würzmittel aufnehmen können, bspw. Pfefferkörner und Salzkristalle. Am Boden jedes Gewürzbehälters ist ein Mahlwerk vorhanden, um die Würzmittel zu zerkleinern. Ausgehend von den Mahlwerken erstreckt sich durch jeden der Gewürzbehälter eine Welle nach oben, um das betreffende Mahlwerk anzutreiben, an deren oberen Ende ist jeweils ein Zahnrad angebracht ist. Am oberen Ende der Gewürzbehälter ist ein Getriebe vorgesehen, das ein schwenkbares Zahnrad enthält, welches mit dem Zahnrad auf der einen Welle in Eingriff kommt, wenn das Getriebe in eine Richtung angetrieben wird, und mit dem Zahnrad der anderen Welle in Eingriff kommt, wenn das Getriebe in der Gegenrichtung angetrieben wird. Die Behälter sind nach oben hin durch eine federbelastete Abdeckung verschlossen, die angehoben und um 90 Grad verdreht werden kann, um Gewürze in die Gewürzbehälter nachzufüllen. Oberhalb und getrennt von der Abdeckung befindet sich ein Drehgriff, der manuell gedreht werden kann und über eine sich durch die Abdeckung hindurch erstreckende zentrale Welle das Getriebe antreibt.

Diese Gewürzmühle weist den Nachteil auf, dass es verhältnismässig umständlich ist, die Würzmittel in ihre jeweiligen Behälter nachzufüllen. Hierzu muss die Abdeckung mitsamt dem Drehgriff gegen eine Federkraft angehoben und um 90° um die zentrale Welle verdreht werden. Zudem erlaubt es die vorgeschlagene Konstruktion nicht, die Gewürzmühle mit einem runden Grundriss herzustellen, da es in diesem Falle nicht mehr möglich wäre, die Abdeckung so zu verdrehen, dass die Gewürze nachgefüllt werden können. Die Gestaltungsmöglichkeiten sind also eingeschränkt. Des weiteren ist der Aufbau dieser Gewürzmühle verhältnismässig kompliziert, da eine auf Zug wirkende Federkraft bereitgestellt werden muss, um die Abdeckung im geschlossenen Zustand nach unten hin vorzuspannen. Das Getriebe dieser Gewürzmühle kann beim Nachfüllen mit den Würzmitteln kontaminiert werden und dadurch Schaden nehmen.

In der US 4,844,352 wird eine Gewürzmühle mit zwei Mahlwerken vorgeschlagen, die einen runden Grundriss aufweist. Bei dieser Gewürzmühle ist ein Deckelteil, das gleichzeitig auch als Drehgriff dient, als Ganzes abnehmbar. Im Deckelteil befindet sich ein Getriebe, welches sicherstellt, dass bei einer Drehung des Deckelteils im Uhrzeigersinn das erste und bei einer Drehung gegen den Uhrzeigersinn das zweite Mahlwerk angetrieben wird. Dieses Getriebe ist lösbar über zwei Wellen mit den Mahlwerken verbunden. Nachteilig an dieser Konstruktion ist es zum einen, dass das Deckelteil sehr gross und schwer wird. Zum anderen muss der Deckel nach dem Nachfüllen der Gewürze in einer ganz bestimmten Position auf das Basisteil aufgesteckt werden, damit die beiden Wellen für die Mahlwerke wieder in ihre jeweiligen Führungen im Getriebe gelangen.

### Darstellung der Erfindung

Es ist daher eine Aufgabe der vorliegenden Erfindung, eine Gewürzmühle zum Zerkleinern zweier unterschiedlicher Würzmittel zur Verfügung zu stellen, die die oben genannten Nachteile vermeidet. Es ist insbesondere eine Aufgabe der vorliegenden Erfindung, eine derartige Gewürzmühle anzugeben, die einen einfacheren Aufbau besitzt und bei der die Würzmittel in einfacher Weise nachgefüllt werden können. Eine derartige Gewürzmühle eignet sich insbesondere als Mühle für Salz und Pfeffer.

Diese Aufgabe wird durch eine Gewürzmühle mit den Merkmalen des Anspruchs 1 gelöst. Vorteilhafte Ausgestaltungen sind in den abhängigen Ansprüchen angegeben.

Die Gewürzmühle umfasst also ein Basisteil mit einem ersten und einem zweiten Gewürzbehälter und einem ersten und einem zweiten Mahlwerk. Die Gewürzbehälter sind nebeneinander angeordnet und vorzugsweise durch eine vertikale Trennwand voneinander getrennt. An einem unteren Ende des ersten Gewürzbehälters ist das erste Mahlwerk angeordnet, und an einem unteren Ende des zweiten Gewürzbehälters ist das zweite Mahlwerk angeordnet. Auf dem Basisteil ist ein Deckelteil angeordnet, das vom Basisteil abnehmbar ist, um ein Nachfüllen von Würzmitteln in die Gewürzbehälter zu ermöglichen. In anderen Worten gibt das Deckelteil, wenn es vom Basisteil abgenommen wird, obere Einfüllöffnungen des ersten und zweiten Gewürzbehälters frei. Dieses Deckelteil dient gleichzeitig als Drehgriff zum Antrieb der Mahlwerke. Zwischen das Deckelteil und die Mahlwerke ist ein Getriebe zwischengeschaltet, welches dazu dient, jeweils nur eines der Mahlwerke selektiv anzutreiben. Das Getriebe ist einerseits mit den Mahlwerken, andererseits mit dem Deckelteil verbunden, zum Beispiel über geeignete Wellen. Das Getriebe ist derart ausgebildet, dass es das erste Mahlwerk antreibt, wenn das Deckelteil in eine erste vorbestimmte Richtung (zum Beispiel im Uhrzeigersinn) gedreht wird. Wenn dagegen das Deckelteil in die entgegengesetzte Richtung (hier gegen den Uhrzeigersinn) gedreht wird, wird das zweite Mahlwerk angetrieben, und zwar vorzugsweise gleichsinnig mit dem ersten Mahlwerk. Das Getriebe ist im Basisteil angeordnet und zu den Gewürzbehältern hin in einem Gehäuse gekapselt.

Auf diese Weise kann das Deckelteil sehr einfach ausgestaltet werden, und es wird eine sehr grosse Gestaltungsfreiheit für die Form des Basisteils und des Deckelteils ermöglicht. Indem das Getriebe gekapselt ist, kann es nicht durch die eingefüllten Gewürze verschmutzt werden. Das Getriebe kann an verschiedenen Orten im Basisteil angeordnet sein. In einer einfachen Ausgestaltung kann das Getriebe zum Beispiel in einem unteren Bereich des Basisteils, zum Beispiel unmittelbar oberhalb der Mahlwerke angeordnet sein. Bevorzugt ist das Getriebe jedoch in einem oberen Bereich des Basisteils angeordnet.

In einer vorteilhaften Ausgestaltung ist das Getriebe derart im oberen Bereich des Basisteils angeordnet, dass das Gehäuse des Getriebes die Einfüllöffnungen zumindest teilweise begrenzt. Die Abmessungen des Getriebes sind also derart, dass zwischen dem Getriebe und einer Aussenwand des Basisteils genügend Raum verbleibt, um durch diesen Raum die Gewürze einzufüllen. Gleichzeitig bildet das Getriebe auf diese Weise eine obere Begrenzung der Hauptkammern der Gewürzbehälter.

Diese hohe Anordnung des Getriebes ist vor allem dann besonders vorteilhaft, wenn die Seitenwände des Gewürzbehälters zumindest teilweise durchsichtig oder durchscheinend sind. In diesem Falle kann der durchsichtige oder durchscheinende Bereich der Seitenwände so angeordnet werden, dass eine Oberkante der Seitenwand in etwa auf gleicher Höhe wie eine Unterkante des Gehäuses des Getriebes oder unterhalb von dieser Unterkante verläuft. Auf diese Weise wird das Getriebe dem direkten Blickwinkel entzogen, während jederzeit visuell festgestellt werden kann, ob sich noch genügend Würzmittel in den Gewürzbehältern befindet.

Die Gewürzmühle gemäss der vorliegenden Erfindung erlaubt eine grosse gestalterische Freiheit bei der Formgebung. Vorzugsweise weist die Gewürzmühle einen im Wesentlichen kreisförmigen Grundriss auf.

In der Regel wird das Getriebe nach unten hin auf den Wellen aufliegen, die sich zwischen dem Getriebe und den Mahlwerken erstrecken. Stattdessen oder zusätzlich kann das Getriebe mitsamt seinem Gehäuse aber auch auf einer Trennwand aufliegen oder an einer Trennwand befestigt sein, die sich von einem Boden des Basisteils nach oben hin erstreckt und den ersten und zweiten Gewürzbehälter voneinander trennt. Diese Trennwand ist vorzugsweise ebenfalls durchsichtig oder durchscheinend ausgestaltet.

Bevorzugt ist in einem oberen Bereich des Basisteils eine Führungsbuchse für das Deckelteil ausgebildet, die über wenigstens zwei Stege mit einem äusseren Wandbereich des Basisteils verbunden ist. Die Führungsbuchse dient dazu, das Deckelteil zu lagern und zu führen, wenn es zum Antrieb des Getriebes gedreht wird. Die Führungsbuchse weist dazu vorzugsweise eine zylindrische Öffnung mit einer innenliegenden zylindrischen Lagerfläche auf, in welche ein entsprechendes Führungselement des Deckelteils einsteckbar ist. Diese Führungsbuchse ist über die Stege mit dem Gehäuse des Basisteils verbunden. Auf diese Weise wird das Getriebe von Führungskräften für das Deckelteil und von Druckkräften von oben her entlastet. Vorzugsweise sind der äussere Wandbereich des Basisteils, die Stege und die Führungsbuchse aus einem Stück ausgebildet. Dies vereinfacht die Herstellung.

Vorzugsweise schliesst sich das Getriebe unmittelbar unterhalb der Führungsbuchse an. In anderen Worten ist vorzugsweise das Gehäuse des Getriebes unterhalb der Führungsbuchse angeordnet und grenzt an diese an.

Für den Antrieb des Getriebes ist vorzugsweise eine Antriebswelle vorhanden, die sich vom Getriebe aus nach oben hin erstreckt. Das Deckelteil ist dann derart lösbar mit der Antriebswelle verbindbar, dass in den beiden Drehrichtungen eine kraft- und/oder formschlüssige Verbindung entsteht. Beispielsweise kann die Antriebswelle in ihrem oberen Bereich mehrkantig, insbesondere als Vierkant, ausgebildet sein, und das Deckelteil weist eine dazu komplementäre Öffnung auf, die auf den oberen Teil der Welle aufgesteckt wird. Es ist aber auch möglich, das Deckelteil in einer geeigneten Art und Weise mit der Antriebswelle zu verschrauben oder in Reibschluss zu bringen.

Für den Antrieb der Mahlwerke wird vorzugsweise ein Getriebe verwendet, das eine Weiterentwicklung des Getriebes darstellt, welches in der US 4,709,865 offenbart ist. Das Getriebe weist ein erstes, zweites, drittes und viertes Zahnrad auf. Das erste, zentrale Zahnrad ist über die Antriebswelle mit dem Deckelteil verbunden und wird von diesem angetrieben. Mit dem ersten Zahnrad steht ein zweites Zahnrad in Eingriff, das an einem verschwenkbaren Arm gelagert ist. Dieser Arm ist um die Drehachse des ersten Zahnrads, also um die Antriebswelle, verschwenkbar. Er ist über einen leichten Reibschluss mit dem ersten Zahnrad oder der Antriebswelle verbunden. Wenn die Antriebswelle in eine erste Richtung gedreht wird, nimmt diese den Arm mit und verschwenkt dadurch das zweite Zahnrad so weit, bis es mit dem dritten Zahnrad in Eingriff gelangt. Wenn dagegen die Antriebswelle in die entgegengesetzte Richtung gedreht wird, nimmt sie den Arm in diese Richtung mit, bis das zweite Zahnrad mit dem vierten Zahnrad in Eingriff gelangt.

Wenn das dritte und das vierte Zahnrad ihre Mahlwerke direkt über eine Welle antreiben, werden sich die Mahlwerke jeweils in der selben Drehrichtung drehen, wie das Deckelteil gedreht wird, also gegenläufig. Dies ist jedoch häufig unerwünscht, da Mahlwerke in der Regel mit einer Vorzugsrichtung hergestellt werden und daher die beiden Mahlwerke, die in der Gewürzmühle verbauten werden, möglichst in den selben Drehrichtung (gleichläufig) angetrieben werden sollten. Aus diesem Grunde ist vorzugsweise ein fünftes Zahnrad vorgesehen, welches das zweite Mahlwerk antreibt. Dieses fünfte Zahnrad steht mit dem vierten Zahnrad im Eingriff, das in diesem Falle nur als Hilfszahnrad dient. Hierdurch wird die Drehrichtung des zweiten Mahlwerks ein weiteres Mal umgekehrt, so dass sich das zweite Mahlwerk immer in der selben Drehrichtung dreht wie das erste Mahlwerk.

### Kurze Beschreibung der Zeichnungen

Bevorzugte Ausführungsformen der Erfindung werden im Folgenden anhand der Zeichnungen beschrieben, in denen zeigen:
- Fig. 1: eine perspektivische Ansicht einer erfindungsgemässen Salz- und Pfeffermühle;
- Fig. 2: eine perspektivische Ansicht der Salz- und Pfeffermühle der Fig. 1 mit abgenommenen Deckelteil;
- Fig. 3: eine perspektivische Teilansicht der Salz- und Pfeffermühle der Fig. 1 im Teilschnitt;
- Fig. 4: eine Schnittdarstellung der Salz- und Pfeffermühle der Fig. 1;
- Fig. 5: eine perspektivische Teilansicht einer Getriebebox.

### Ausführliche Beschreibung bevorzugter Ausführungsformen

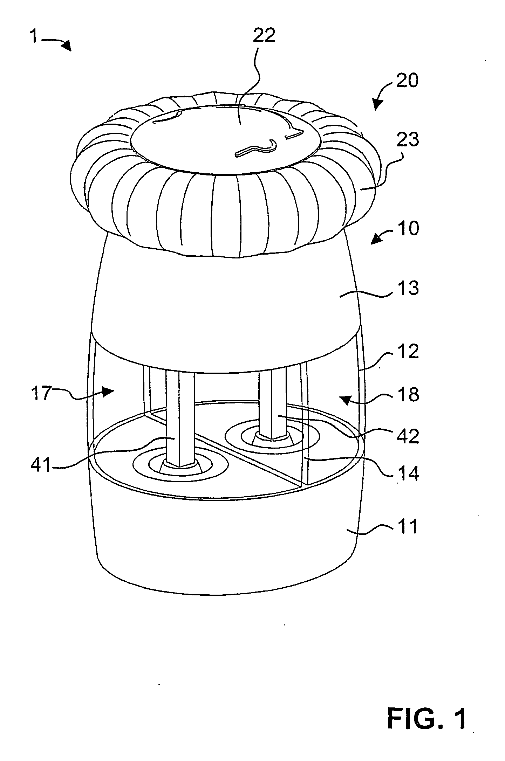

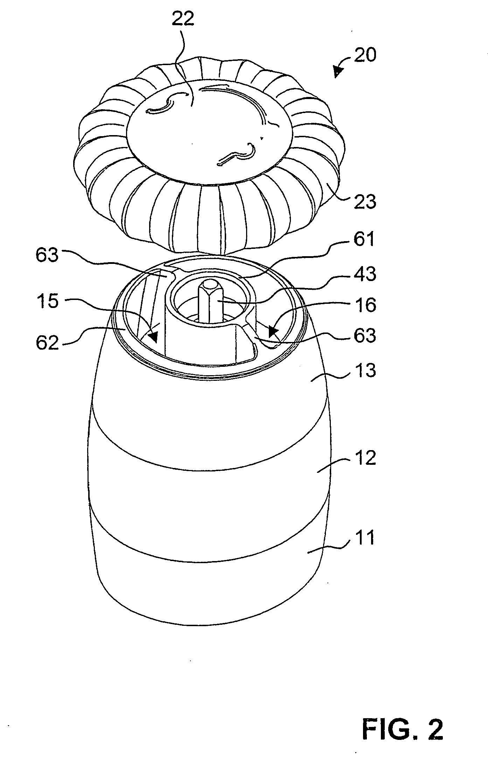

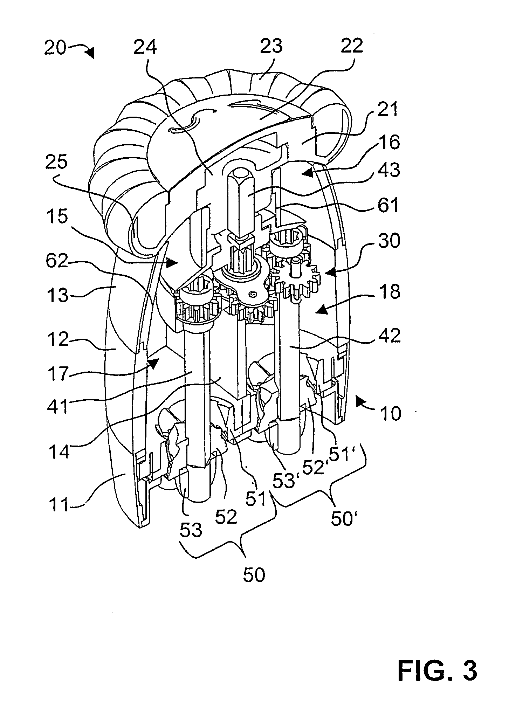

In den Figuren 1 bis 4 ist eine erfindungsgemässe Salz- und Pfeffermühle in verschiedenen Ansichten dargestellt.

Die Salz- und Pfeffermühle 1 weist ein Basisteil 10 und ein davon abnehmbares Deckelteil 20 auf. Das Basisteil 10 weist ein mehrteiliges Gehäuse auf, welches insbesondere ein Gehäuseunterteil 11, eine Sichtwand 12 und ein Gehäuseoberteil 13 umfasst. Das Gehäuse ist durch eine Trennwand 14 in zwei getrennte Gewürzbehälter unterteilt, nämlich zeine Salzbehälter 17 und einen Pfefferbehälter 18. Selbstverständlich ist die Mühle aber auch für andere Würzmittel geeignet. Das Gehäuseunterteil 11 bildet den Boden dieser Behälter, wobei in jedem Behälterboden jeweils ein Mahlwerk 50 bzw. 50' angeordnet ist. Die Mahlwerke sind konventionell aufgebaut, mit einem konischen Mahlrad 52, 52' als Rotor, das in einem auch als Mahlzylinder bezeichneten Widerlager 51, 51' als Stator läuft. Jedes der Mahlräder 52, 52' ist mit einer als Flügelmutter ausgebildeten Fixiermutter 53, 53' auf jeweils einer Vierkantwelle 41, 42 fixiert. Die Wellen 41, 42 verbinden jedes der Mahlwerke 50, 50' mit einer Getriebebox 30, die im weiteren Verlauf noch ausführlicher beschrieben wird. Nach oben hin erstreckt sich aus der Getriebebox 30 heraus eine Antriebswelle 43. Auch diese Antriebswelle 43 ist in Form eines Vierkants ausgebildet. Die Funktion der Getriebebox ist die Folgende: wenn die Antriebswelle im Uhrzeigersinn gedreht wird, wird der Rotor 52 des ersten Mahlwerks 50 in Drehung versetzt. Wenn dagegen die Antriebswelle gegen den Uhrzeigersinn gedreht wird, wird der Rotor 52' des zweiten Mahlwerks 50' in Drehung versetzt, und zwar gleichsinnig mit dem Rotor des ersten Mahlwerks. Auf diese Weise wird, je nach der Drehrichtung der Antriebswelle, jeweils ein Mahlwerk selektiv in derselben Drehrichtung angetrieben.

Die Getriebebox 30 befindet sich in einem oberen Bereich des Basisteils 10. Ihre Abmessungen sind derart, dass zwischen der Getriebebox und der Aussenwand des Gehäuseoberteils 13 ein ringförmiger Spalt genügender Grösse bleibt, um durch diesen Spalt hindurch Salz bzw. Pfeffer in den jeweiligen Behälter 17 bzw. 18 einzufüllen. Die Getriebebox begrenzt also zusammen mit dem Gehäuseoberteil 13 zwei Einfüllöffnungen 15, 16.

Unmittelbar oberhalb der Getriebebox befindet sich eine Führungsbuchse 61 für das Deckelteil 20. Diese im Wesentlichen ring- oder zylinderförmige Führungsbuchse ist über zwei Stege 63 mit dem äusseren Wandbereich 62 des Gehäuseoberteils 13 verbunden und aus einem Stück mit diesem gefertigt.

Das Deckelteil 20 weist einen Träger 21 auf, der radial von einem ringförmigen Griffbereich 23 umgeben ist, der aus einem vergleichsweise weicheren Material als der Träger 21 gefertigt ist. Um den Griffbereich 23 am Träger 21 zu fixieren, weist der Träger 21 an seinem äusseren Rand einen zunächst radial nach aussen und dann nach oben hin umgebogenen, umlaufenden Bereich 25 auf, der wie ein Widerhaken für den Drehgriff 23 wirk. Der Träger 21 ist nach oben hin durch eine Abdeckplatte 22 abgedeckt. Nach unten hin ist im Träger 21 ein Führungs- und Verbindungselement 24 fixiert, z.B. eingeschraubt, eingepresst, eingesteckt oder eingeklebt, dessen Aussenkontur zylindrisch und komplementär zur Innenkontur der Führungsbuchse 61 ist. Auf diese Weise wird das Deckelteil 20 in der Führungsbuchse 61 geführt. Das Verbindungselement 24 weist eine zentrale Öffnung mit quadratischem Grundriss auf, die zur Aussenkontur der Antriebswelle 43 komplementär ist. Auf diese Weise wird ein Formschluss zwischen der Welle 43 und dem Deckelteil 20 sowohl im als auch gegen den Uhrzeigersinn hergestellt. Nach oben hin wird das Deckelteil 20 entweder allein durch die Reibungskraft zwischen dem Verbindungselement 24 einerseits und der Welle 43 bzw. der Führungsbuchse 61 andererseits gehalten, oder es ist eine nicht zeichnerisch dargestellte, lösbare Rastverbindung vorhanden. Für eine derartige Rastverbindung bestehen verschiedene Möglichkeiten, z.B. in Form von Federnasen an der Führungsbuchse 61, die in eine ringförmige Vertiefung des Verbindungselements 24 ragen.

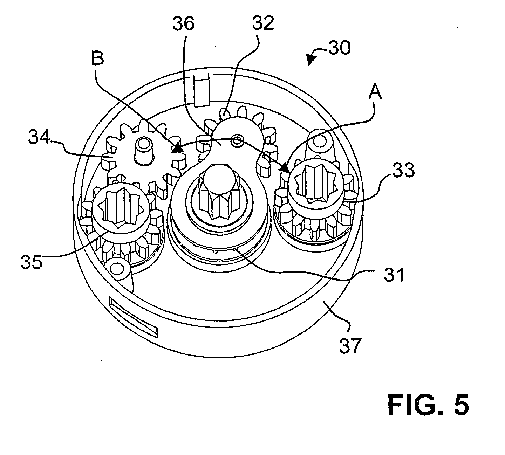

Im Folgenden werden der Aufbau und die Funktionen der Getriebebox 30 anhand der Fig. 5 erläutert. In einem Unterteil 37 des Gehäuses für das Getriebe befinden sich insgesamt fünf Zahnräder. Ein zentrales Zahnrad 31 befindet sich in der Verlängerung der Antriebswelle 43. Ein zweites Zahnrad 32 steht in Eingriff mit dem ersten Zahnrad 31. Dieses Zahnrad 32 ist auf einem schwenkbaren Arm 36 (oder zwischen zwei derartigen Armen) montiert, so dass es zwischen einem dritten Zahnrad 33 und einem vierten Zahnrad 34 verschwenkbar ist. Bei einer Verschwenkung in die erste Richtung A kommt das Zahnrad 32 in Eingriff mit dem Zahnrad 33, während es bei einer Verschwenkung in die Richtung B mit dem Zahnrad 34 in Eingriff gelangt. Der Schwenkarm 36 ist auf dem Zahnrad 31 so montiert, dass er aufgrund der Reibung mit dem Zahnrad 31 so lange mitgenommen wird, bis das Zahnrad 32 mit einem der beiden Zahnräder 33 und 34 in Eingriff gelangt und dadurch der Schwenkarm 36 daran gehindert wird, weiter in die betreffende Richtung zu verschwenken. Die Reibungskraft ist dabei so gering, dass die Drehung des Zahnrades 31 nicht entscheidend behindert wird. Das Zahnrad 33 ist über die Welle 41 direkt mit dem Mahlwerk 50 verbunden. Bei einer Drehung des Deckelteils 20 im Uhrzeigersinn wird über die Antriebswelle 43 das Zahnrad 31 in eine Drehung im Uhrzeigersinn versetzt, wodurch das Zahnrad 32 in Schwenkrichtung A verschwenkt wird und mit Zahnrad 33 in Eingriff gelangt. Hierdurch wird das erste Mahlwerk 50 angetrieben. Bei einer Drehung des Deckelteils 20 im Uhrzeigersinn wird also letztlich der Rotor 52 des ersten Mahlwerks 50 in eine Drehung im Uhrzeigersinn versetzt. Bei einer Drehung des Deckelteils entgegen dem Uhrzeigersinn wird dagegen das Zahnrad 32 in Schwenkrichtung B verschwenkt und gelangt in Eingriff mit Zahnrad 34. Dieses Hilfszahnrad 34 steht wiederum in Eingriff mit einem weiteren Zahnrad 35. Es dient einer Drehrichtungsumkehr für das Zahnrad 35. Letzteres steht über die Welle 42 mit dem zweiten Mahlwerk 50' in Verbindung. Bei einer Drehung des Deckelteils 20 entgegen dem Uhrzeigersinn wird diese Drehung über die Zahnräder 31, 32, 34 und 35 derart übertragen, dass der Rotor 52' des zweiten Mahlwerks 50' in eine Drehung im Uhrzeigersinn versetzt wird. Auf diese Weise wird sichergestellt, dass jedes der beiden Mahlwerke 50, 50', unabhängig von der Drehrichtung des Deckelteils 20, immer in eine Drehung in der selben Drehrichtung, nämlich im Uhrzeigersinn versetzt werden.

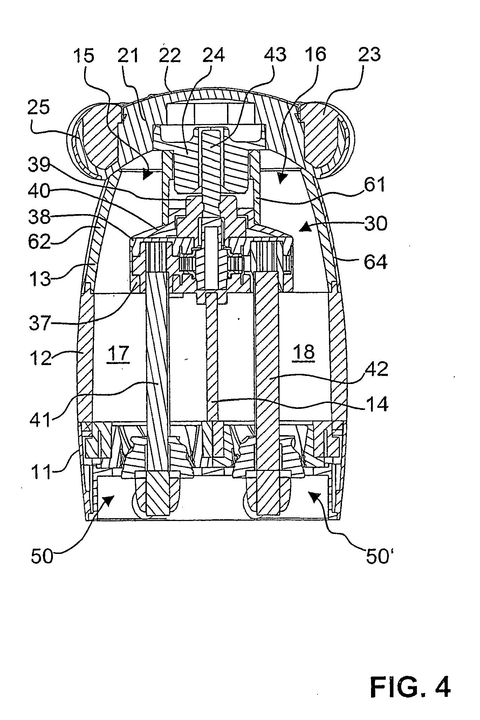

Wie besonders aus der Fig. 4 erkennbar ist, ist die Getriebebox nach oben hin durch ein Gehäuseoberteil 38 abgeschlossen. Aus dem Gehäuseoberteil 38 erstreckt sich nach oben hin die Antriebswelle 43 heraus, auf welche ein Lagerelement 39 aufgeschoben ist, welches mit der Antriebswelle 43 rotiert. Über das Lagerelement 39 ist eine überwurfartige Abdeckung 40 geschoben. Das Gehäuseunterteil 37, das Gehäuseoberteil 38, das Lagerelement 39 und die Abdeckung 40 begrenzen gemeinsam die Getriebebox 30 nach aussen hin. Insbesondere begrenzen diese Teile zumindest teilweise die Einfüllöffnungen 15 und 16 für die Salzkristalle bzw. Pfefferkörner. Zudem begrenzt die Getriebebox die eigentlichen Hauptkammern der Gewürzbehälter 17 und 18 nach oben hin.

Bevorzugt wird die Salz- und Pfeffermühle aus den folgenden Materialen gefertigt: das Gehäuse des Basisteils 10 besteht vorzugsweise in den nicht transparenten Bereichen aus dem schlagzähen Kunststoff ABS und ist nach aussen hin zusätzlich vorzugsweise von einer dünnen Schicht aus rostfreiem Stahl überzogen, die zum Schutz und zur Zierde dient (als Umhüllung 64 in der Fig. 4 erkennbar). Die Sichtwand 12 besteht ebenso wie die Trennwand 14 vorzugsweise aus Acrylglas. Die Mahlwerke sind vorzugsweise aus einem keramischen Material gefertigt, welches eine hohe Korrosionsbeständigkeit aufweist. Letzteres ist insbesondere für dasjenige Mahlwerk wichtig, welches mit dem Salz in Berührung kommt. Der Träger 21 des Deckelteils 20 ist vorzugsweise aus Polypropylen gefertigt. Der Griffring 23 besteht vorzugsweise aus einem thermoplastischen Elastomer, zum Beispiel aus Santoprene™. Das Verbindungselement 24 besteht vorzugsweise aus Metall und ist bevorzugt in den Träger 21 des Deckelteils 20 eingepresst. Die Abdeckplatte 22 wird vorzugsweise aus rostfreiem Stahl gefertigt. Vorzugsweise sind geeignete Symbole in dieser Abdeckung eingeprägt, welche anzeigen, welches Würzmittel bei welcher Drehrichtung mit der Salz- und Pfeffermühle gemahlen wird.

Während die Erfindung anhand eines bevorzugten Ausführungsbeispiels erläutert wurde, sind selbstverständlich eine Vielzahl von Abwandlungen und anderen Ausgestaltungen möglich. So braucht die Salz- und Pfeffermühle insbesondere keinen kreisförmigen Grundriss aufzuweisen, wie dies im obigen Ausführungsbeispiel der Fall ist. Im Gegenteil ermöglicht die vorliegende Erfindung eine grosse Freiheit bei der Formgestaltung. Auch hinsichtlich der Materialwahl besteht eine grosse Freiheit. So kann zum Beispiel auch das gesamte äussere Gehäuse des Basisteils 10 aus einem transparenten Material hergestellt werden, oder das Deckelteil kann hinsichtlich Materialwahl und Form in einer beinahe beliebigen anderen Art und Weise hergestellt werden.

Auch das hier beispielhaft dargestellte Getriebe zum selektiven Antrieb der Mahlwerke kann anders ausgestaltet werden als im obigen Ausführungsbeispiel. Insbesondere kann in einer vereinfachten Ausführungsform ein Getriebe vorgesehen werden, die es in der US 4,709,865 dargestellt ist (d.h. mit gegenläufigen Mahlwerken). Alternativ kann auch ein Getriebe eingesetzt werden, wie es in der US 4,844,352 dargestellt ist. In diesem Dokument läuft ein zentrales Zahnrad auf einer Steilgewindespindel, ist dadurch in der Höhe verstellbar und kann auf diese Weise selektiv mit Zahnrädern in Eingriff gebracht werden, welche die beiden Mahlwerke antreiben.

Die Getriebebox 30 kann auch an anderen Orten im Basisteil 10 angeordnet werden, als dies im vorstehend beschriebenen Ausführungsbeispiel der Fall ist. So kann die Getriebebox z.B. um einen gewissen Betrag nach unten verschoben sein oder kann sogar nur knapp über dem Boden des Gehäuseunterteils 11 angeordnet sein. In letzteren Falle muss jedoch sichergestellt werden, dass der Platz zwischen den Mahlwerken und der Getriebebox ausreichend gross ist, dass die Pfefferkörner bzw. Salzkristalle ungehindert in die Mahlwerke gelangen können.

### Bezugszeichenliste

- 1: Salz-/Pfeffermühle
- 10: Basisteil
- 11: Gehäuseunterteil
- 12: Sichtwand
- 13: Gehäuseoberteil
- 14: Trennwand
- 15: erste Einfüllöffnung
- 16: zweite Einfüllöffnung
- 17: Salzbehälter
- 18: Pfefferbehälter
- 20: Deckel
- 21: Träger
- 22: Abdeckplatte
- 23: Griffbereich
- 24: Verbindungselement
- 25: gebogener Bereich
- 30: Getriebebox
- 31: erste (zentrales) Zahnrad
- 32: zweites Zahnrad
- 33: drittes Zahnrad
- 34: viertes Zahnrad (Hilfszahnrad)
- 35: fünftes Zahnrad
- 36: Schwenkarm
- 37: Gehäuseunterteil
- 38: Gehäuseoberteil
- 39: Lagerelement
- 40: Abdeckung
- 41: erste Übertragungswelle
- 42: zweite Übertragungswelle
- 43: Antriebswelle
- 50, 50': Mahlwerk
- 51, 51': Widerlager (Mahlzylinder, Stator)
- 52, 52': konisches Mahlrad (Rotor)
- 53, 53': Fixiermutter
- 61: Führungsbuchse
- 62: äusserer Wandbereich
- 63: Steg
- 64: Umhüllung
- A: erste Schwenkrichtung
- B: zweite Schwenkrichtung

## Patentansprüche

1. Gewürzmühle zum Zerkleinern zweier unterschiedlicher Würzmittel, umfassend
- ein Basisteil (10), das einen ersten und einen zweiten Gewürzbehälter (17, 18) sowie ein erstes und ein zweites Mahlwerk (50, 50') aufweist, wobei die Gewürzbehälter (17, 18) nebeneinander angeordnet sind und das erste Mahlwerk (50) an einem unteren Ende des ersten Gewürzbehälters (17) und das zweite Mahlwerk (50') an einem unteren Ende des zweiten Gewürzbehälters (18) angeordnet ist;
- ein als Drehgriff dienendes Deckelteil (20), das vom Basisteil (10) abnehmbar ist, um obere Einfüllöffnungen (15, 16) des ersten und zweiten Gewürzbehälters (17, 18) freizugeben; sowie
- ein mit den Mahlwerken (50, 50') und dem Deckelteil (20) verbundenes Getriebe (30), wobei das Getriebe (30) derart ausgebildet ist, dass durch eine Drehung des Deckelteils (20) in eine erste vorbestimmte Drehrichtung das erste Mahlwerk (50) angetrieben wird und durch eine Drehung des Deckelteils (20) in eine zweite vorbestimmte Drehrichtung das zweite Mahlwerk (50') angetrieben wird,
**dadurch gekennzeichnet, dass** das Getriebe (30) im Basisteil (10) angeordnet und zu den Gewürzbehältern (17, 18) hin in einem Gehäuse (37, 38, 39, 40) gekapselt ausgebildet ist.

2. Gewürzmühle (1) nach Anspruch 1, wobei das Getriebe (30) derart in einem oberen Bereich des Basisteils (10) angeordnet ist, dass das Gehäuse (37, 38, 39, 40) des Getriebes (30) die Einfüllöffnungen (15, 16) zumindest teilweise begrenzt.

3. Gewürzmühle (1) nach Anspruch 2, wobei das Basisteil (10) mindes-tens eine durchsichtige oder durchscheinende Seitenwand (12) aufweist, deren Oberkante etwa auf gleicher Höhe wie eine Unterkante des Gehäuses (37, 38, 39, 40) des Getriebes (30) oder unterhalb von dieser verläuft.

4. Gewürzmühle nach einem der vorhergehenden Ansprüche mit rundem Grundriss.

5. Gewürzmühle nach einem der vorhergehenden Ansprüche, wobei das Basisteil (10) einen Boden aufweist, von dem sich eine Trennwand (14) aus nach oben erstreckt und den ersten und zweien Gewürzbehälter (17, 18) voneinander trennt, und wobei das Getriebe (30) in einem oberen Bereich der Trennwand (14) auf dieser aufliegt und/oder an dieser befestigt ist.

6. Gewürzmühle nach einem der vorhergehenden Ansprüche, wobei in einem oberen Bereich des Basisteils (10) eine Führungsbuchse (61) für das Deckelteil (20) ausgebildet ist, und wobei die Führungsbuchse (61) über wenigstens zwei Stege (63) mit einem äusseren Wandbereich (62) des Basisteils (10) verbunden ist.

7. Gewürzmühle nach Anspruch 6, wobei die Einfüllöffnungen (15, 16) zumindest teilweise von dem äusseren Wandbereich (62), der Führungsbuchse (61) und den Stegen (63) begrenzt sind.

8. Gewürzmühle nach Anspruch 6 oder 7, wobei das Getriebe (30) unterhalb der Führungsbuchse (61) angeordnet ist und an diese angrenzt.

9. Gewürzmühle nach einem der vorhergehenden Ansprüche, wobei eine Antriebswelle (43) vorhanden ist, die sich vom Getriebe (30) aus nach oben hin erstreckt, und wobei das Deckelteil (10) derart lösbar mit der Antriebswelle (43) verbindbar ist, dass in den Drehrichtungen eine kraft- und/oder formschlüssige Verbindung entsteht.

10. Gewürzmühle nach einem der vorhergehenden Ansprüche, wobei das Getriebe (30) ein erstes, zweites, drittes und viertes Zahnrad (31, 32, 33, 34) aufweist, wobei das erste Zahnrad (31) über eine Antriebswelle (43) mit dem Deckelteil (20) verbunden und von diesem antreibbar ist, wobei das zweites Zahnrad (32) ständig mit dem ersten Zahnrad in Eingriff steht und derart an einem um die Drehachse des ersten Zahnrads verschwenkbaren Arm (36) gelagert ist, dass es in einer ersten Schwenkposition (A) mit dem dritten Zahnrad (33) in Eingriff kommt und in einer zweiten Schwenkposition (B) mit dem vierten Zahnrad (34) in Eingriff kommt, und wobei das dritte Zahnrad (33) direkt oder indirekt das erste Mahlwerk (50) und das vierte Zahnrad (34) direkt oder indirekt das zweite Mahlwerk (50') antreibt.

11. Gewürzmühle nach Anspruch 10, wobei das dritte Zahnrad (33) auf einer ersten Welle (41) montiert ist, die mit dem ersten Mahlwerk (50) verbunden ist und dieses antreibt, und wobei das vierte Zahnrad (34) mit einem fünften Zahnrad (35) in Eingriff steht, welches auf einer zweiten Welle (42) montiert ist, die mit dem zweiten Mahlwerk (50') verbunden ist und dieses antreibt.

## Claims

1. A spice mill for crushing two different condiments, comprising
- a base part (10) having a first and a second spice container (17, 18) and a first and a second grinding mechanism (50, 50'), the spice containers (17, 18) being arranged next to each other, the first grinding mechanism (50) being arranged at a lower end of the first spice container (17) and the second grinding mechanism (50') being arranged at a lower end of the second spice container (18);
- a cover part (20) serving as a rotary handle and being removable from the base part (10) to uncover upper filling openings (15, 16) for the first and second spice container (17, 18); and
- a gear mechanism (30) which is connected to the grinding mechanisms (50, 50') and the cover part (20), the gear mechanism (30) being formed in such a way that rotation of the cover part (20) in a predetermined direction of rotation causes the first grinding mechanism (50) to be driven and that rotation of the cover part (20) in a second predetermined direction of rotation causes the second grinding mechanism (50') to be driven,
**characterized in that** the gear mechanism (30) is arranged in the base part (10) and encapsulated in a housing (37, 38, 39, 40) toward the spice containers (17, 18).

2. The spice mill (1) as claimed in claim 1, wherein the gear mechanism (30) is arranged in an upper region of the base part (10) in such a way that the housing (37, 38, 39, 40) of the gear mechanism (30) at least partly bounds the filling openings (15, 16).

3. The spice mill (1) as claimed in claim 2, wherein the base part (10) has at least one transparent or translucent side wall (12), the upper edge of which extending substantially at the same level as a lower edge of the housing (37, 38, 39, 40) of the gear mechanism (30) or below said lower edge.

4. The spice mill as claimed in one of the preceding claims, having a round outline.

5. The spice mill as claimed in one of the preceding claims, wherein the base part (10) has a bottom from which a partition (14) extends upward and separates the first and second spice containers (17, 18) from each other, and wherein the gear mechanism (30) in an upper region of the partition (14) rests on said partition and/or is fastened thereto.

6. The spice mill as claimed in one of the preceding claims, wherein in an upper region of the base part (10) a guide bush (61) is formed for the cover part (20), and wherein the guide bush (61) is connected to an outer wall region (62) of the base part (10) via at least two webs (63).

7. The spice mill as claimed in claim 6, wherein the filling openings (15, 16) are bounded at least partly by the outer wall region (62), the guide bush (61) and the webs (63).

8. The spice mill as claimed in claim 6 or 7, wherein the gear mechanism (30) is arranged below and adjoins the guide bush (61).

9. The spice mill as claimed in one of the preceding claims, wherein a drive shaft (43) is provided and extends upward from the gear mechanism (30), and wherein the cover part (10) is releasably connectable to the drive shaft (43) so as to produce in the directions of rotation a non-positive and/or positive connection.

10. The spice mill as claimed in one of the preceding claims, wherein the gear mechanism (30) has a first, second, third and fourth gear wheel (31, 32, 33, 34), wherein the first gear wheel (31) is connected to the cover part (20) via a drive shaft (43) and can be driven by said cover part, wherein the second gear wheel (32) is at all times in engagement with the first gear wheel and is mounted on an arm (36), which is able to pivot about the axis of rotation of the first gear wheel, in such a way that it in a first pivoting position (A) enters into engagement with the third gear wheel (33) and in a second pivoting position (B) enters into engagement with the fourth gear wheel (34), and wherein the third gear wheel (33) directly or indirectly drives the first grinding mechanism (50) and the fourth gear wheel (34) directly or indirectly drives the second grinding mechanism (50').

11. The spice mill as claimed in claim 10, wherein the third gear wheel (33) is mounted on a first shaft (41) which is connected to and drives the first grinding mechanism (50), and wherein the fourth gear wheel (34) is in engagement with a fifth gear wheel (35) which is mounted on a second shaft (42) which is connected to and drives the second grinding mechanism (50').

## Revendications

1. Moulin combiné pour broyer deux épices différentes, comprenant
- une partie de base (10), qui présente un premier et un deuxième réservoir à épices (17, 18) ainsi qu'un premier et un deuxième mécanisme de broyage (50, 50'), dans lequel les réservoirs à épices (17, 18) sont disposés l'un à côté de l'autre et le premier mécanisme de broyage (50) est agencé à une extrémité inférieure du premier réservoir à épices (17) et le deuxième mécanisme de broyage (50') est agencé à une extrémité inférieure d'un deuxième réservoir à épices (18);
- une partie de couvercle (20) servant de poignée rotative, qui peut être enlevée de la partie de base (10), afin de libérer des ouvertures de remplissage supérieures (15, 16) du premier et du deuxième réservoir à épices (17, 18); ainsi que
- une transmission (30) reliée aux mécanismes de broyage (50, 50') et à la partie de couvercle (20), dans lequel la transmission (30) est réalisée de telle manière que le premier mécanisme de broyage (50) soit entraîné par une rotation de la partie de couvercle (20) dans un premier sens de rotation prédéterminé et que le deuxième mécanisme de broyage (50') soit entraîné par une rotation de la partie de couvercle (20) dans un deuxième sens de rotation prédéterminé,
**caractérisé en ce que** la transmission (30) est agencée dans la partie de base (10) et est réalisée sous forme encapsulée dans un boîtier (37, 38, 39, 40) vis-à-vis des réservoirs à épices (17, 18).

2. Moulin à épices (1) selon la revendication 1, dans lequel la transmission (30) est agencée dans une région supérieure de la partie de base (10), de telle manière que le boîtier (37, 38, 39, 40) de la transmission (30) limite au moins partiellement les ouvertures de remplissage (15, 16).

3. Moulin à épices (1) selon la revendication 2, dans lequel la partie de base (10) présente au moins une paroi latérale transparente ou translucide (12), dont l'arête supérieure s'étend environ à la même hauteur que l'arête inférieure du boîtier (37, 38, 39, 40) de la transmission (30) ou en dessous de celle-ci.

4. Moulin à épices selon l'une quelconque des revendications précédentes, présentant un contour rond.

5. Moulin à épices selon l'une quelconque des revendications précédentes, dans lequel la partie de base (10) présente un fond, à partir duquel une cloison de séparation (14) s'étend vers le haut et sépare l'un de l'autre le premier et le deuxième réservoir à épices (17, 18), et dans lequel la transmission (30) est appliquée sur la cloison de séparation (14) dans une région supérieure de celle-ci et/ou est fixée à celle-ci.

6. Moulin à épices selon l'une quelconque des revendications précédentes, dans lequel une douille de guidage (61) pour la partie de couvercle (20) est réalisée dans une région supérieure de la partie de base (10), et dans lequel la douille de guidage (61) est reliée à une région de paroi extérieure (62) de la partie de base (10) par au moins deux nervures (63).

7. Moulin à épices selon la revendication 6, dans lequel les ouvertures de remplissage (15, 16) sont limitées au moins en partie par la région de paroi extérieure (62), la douille de guidage (61) et les nervures (63).

8. Moulin à épices selon la revendication 6 ou 7, dans lequel la transmission (30) est agencée en dessous de la douille de guidage (61) et est adjacente à celle-ci.

9. Moulin à épices selon l'une quelconque des revendications précédentes, dans lequel il se trouve un arbre d'entraînement (43), qui s'étend vers le haut à partir de la transmission (30), et dans lequel la partie de couvercle (20) peut être assemblée de façon séparable à l'arbre d'entraînement (43), de telle manière qu'il se forme un assemblage par complémentarité de force et/ou de forme dans les sens de rotation.

10. Moulin à épices selon l'une quelconque des revendications précédentes, dans lequel la transmission (30) comprend une première, une deuxième, une troisième et une quatrième roue dentée (31, 32, 33, 34), dans lequel la première roue dentée (31) est reliée à la partie de couvercle (20) par un arbre d'entraînement (43) et peut être entraînée par celle-ci, dans lequel la deuxième roue dentée (32) est constamment en prise avec la première roue dentée et est montée sur un bras (36) apte à pivoter autour de l'axe due rotation de la première roue dentée de telle manière qu'elle vienne en prise, dans une première position de pivotement (A), avec la troisième roue dentée (33) et, dans une deuxième position de pivotement (B), avec la quatrième roue dentée (34), et dans lequel la troisième roue dentée (33) entraîne directement ou indirectement le premier mécanisme de broyage (50) et la quatrième roue dentée (34) entraîne directement ou indirectement le deuxième mécanisme de broyage (50').

11. Moulin à épices selon la revendication 10, dans lequel la troisième roue dentée (33) est montée sur un premier arbre (41), qui, est relié au premier mécanisme de broyage (50) et qui entraîne celui-ci, et dans lequel la quatrième roue dentée (34) est en prise avec une cinquième roue dentée (35), qui est montée sur un deuxième arbre (42), qui est relié au deuxième mécanisme de broyage (50') et qui entraîne celui-ci.
